# EUROPÄISCHE PATENTANMELDUNG

(11) **EP 1 344 732 A1**
(43) Veröffentlichungstag der Anmeldung: **17.09.2003**
(21) Anmeldenummer: 02004350.1
(22) Anmeldetag: 01.03.2002
(51) Int. Cl.: B65G 53/46

(54) **Einrichtung zur Minimierung des Gasflusses durch Zellradschleusen**

(71) Anmelder: Baier, Kurt, Ing., 4615 Holzhausen (AT)
(72) Erfinder: Baier, Kurt, Ing., 4615 Holzhausen (AT)
(74) Vertreter: Landgraf, Elvira, Dipl.-Ing.

(57) **Zusammenfassung**

Einrichtung zur Minimierung des Gasflusses durch Zellradschleusen, insbesondere bei der Förderung von Schüttgut durch Sperrgasbeaufschlagung der Zellradschleuse, die zwischen zwei Räumen (A) und (B) angeordnet ist, dadurch gekennzeichnet, dass im Gehäuse der Zellradschleuse (3) Sperrgasöffnungen beziehungsweise Sperrgasanschlüsse (1) vorgesehen sind, wobei der erforderliche Sperrgasdruck derart eingestellt ist, dass er höher ist als der Druck in jenem der Räume (A) oder (B), aus dem der Gasfluss durch die Zellradschleuse verhindert werden soll.

## Beschreibung

Die Erfindung betrifft eine Einrichtung zur Minimierung des Gasflusses durch Zellradschleusen.
Zellradschleusen in den verschiedensten Ausführungen werden in die Förderwege von Schüttgut eingebaut um Gasströmungen entlang dieser Förderwege zu minimieren.
Die Minimierung von Gasströmungen entlang der Förderwege von Schüttgut ist notwendig, da das Gas nicht von dem vor der Zellradschleuse liegenden Raum in den hinter der Zellradschleuse liegenden Raum gesaugt werden soll. Ist das Gas im Raum auf einer Seite der Zellradschleuse zum Beispiel heiß, können Schäden im Förderweg auf der anderen Seite der Zellradschleuse auftreten.

Es wurden zur Minimierung des Gasflusses durch Zellradschleusen für Schüttgut bereits mechanische Dichtungen eingesetzt. Diese haben aber den Nachteil, dass sie durch den Transport von Schüttgut durch diese Dichtungen sehr stark verschleißanfällig sind und nur eine geringe Lebensdauer aufweisen. Dadurch werden derartige Einrichtungen sehr wartungsintensiv.

Das Fördermedium selbst kann oft keine Dichtungsfunktion übernehmen, da Schüttgut ein lockeres Medium ist, durch dessen Zwischenräumen gasförmiges Medium gesaugt werden kann.

Aufgabe der Erfindung war es daher den Gasfluss durch Zellradschleusen bei der Förderung von Medien, die selbst keine Dichtungsfunktion ausüben können, ohne die Verwendung verschleißanfälliger mechanischer Dichtungen zu minimieren.

Gegenstand der Erfindung ist eine Einrichtung zur Minimierung des Gasflusses durch Zellradschleusen, insbesondere bei der Förderung von Schüttgut durch Sperrgasbeaufschlagung der Zellradschleuse zwischen zwei Räumen (A) und (B), dadurch gekennzeichnet, dass im Gehäuse des Zellrades (3) Sperrgasöffnungen beziehungsweise Sperrgasanschlüsse (1) vorgesehen sind, wobei der erforderliche Sperrgasdruck derart eingestellt ist, dass er höher ist als der Druck in jenem der Räume (A) oder (B), aus dem der Gasfluss durch die Zellradschleuse verhindert werden soll.

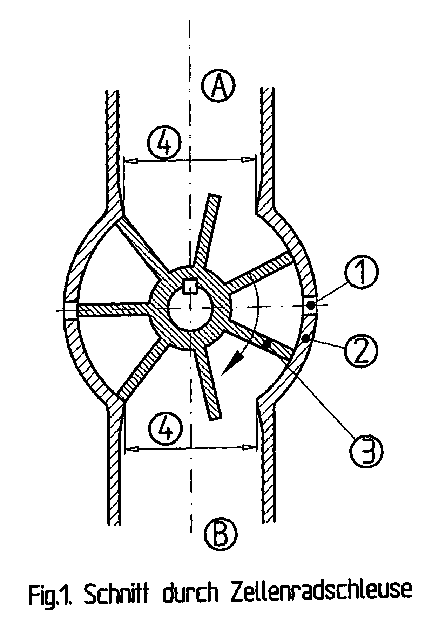

Fig. 1 zeigt eine erfindungsgemäße Einrichtung.
Darin bedeuten 1 die Sperrgasöffnungen bzw. die Sperrgasanschlüsse, 2 das Gehäuse der Zellradschleuse 3 das Zellrad und 4 die Hauptdurchtrittsöffnung.

Durch diese Einrichtung kann Gasfluss durch Zellradschleusen ohne mechanische Dichtungen für Medien, die selbst keine Dichtungseigenschaften aufweisen, wie beispielsweise Schüttgut minimiert werden. Es kann sowohl beispielsweise der Lufteintrittes durch die Zellradschleuse in einen mit Inertgas gefüllten Raum als auch der Austritt von heißen oder explosiven Gasen durch die Zellradschleuse aus einem Raum minimiert werden, wobei in Abhängigkeit von der Strömungsrichtung des zu verhindernden bzw. zu minimierenden Gasflusses der Druck des Sperrgases gewählt wird.

Wenn das Zellrad der Schleuse ohne Dichtungen ausgeführt ist und/oder das durch die Zellradschleuse geförderte Schüttgut selbst den Spalt zwischen Zellenrad und Gehäuse nicht dichtet, strömt durch die Zellradschleuse in Abhängigkeit von Differenzdruck und Spaltgröße Gas, wobei die Flußrichtung des Gases vom der Richtung des Differenzdruckgefälles bestimmt ist, unabhängig von der Schüttgutflußrichtung.

Für die erfindungsgemäße Einrichtung müssen zwischen den Hauptdurchtrittsöffnungen mindestens jeweils mindestens zwei Kammern des Zellrades (3) durch Umschließungsflächen des Schleusengehäuses (2) verschlossen sein. Es ist von untergeordneter Bedeutung, ob die Sperrgasöffnungen/-anschlüsse (1) in der Mantelwand oder in der den Deckwänden der zylindrischen Schleusenkonstruktion ausgeführt sind, sie müssen aber mindestens eine Kammeröffnung weit von den Hauptdurchtrittsöffnungen (4) entfernt sein. Der Sperrgaszufluß kann über eine Öffnung, die im Regelfall in Umfangrichtung der Schleuse geringfügig größer ist als die Kammertrennwand des Zellrades, genauso aber auch über mehrere kleine Öffnungen erfolgen, die in Abhängigkeit von Schüttgutkorngröße und Zellradbreite gewählt und angeordnet werden. Die Dichtqualität kann mit der Anzahl der Zellradkammern gesteigert werden, je mehr Kammern desto mehr Kammertrennwände sind entlang der geschlossenen Mantelfläche zwischen Sperrgas-öffnungen/anschlüssen (1) und Hauptdurchtrittsöffnung (4) möglich.

Die Art des Sperrgases wird entsprechend den gewünschten Schutzbedingungen einerseits und entsprechend den Rahmenbedingungen des Gesamtprozesses gewählt. Soll beispielsweise der Lufteintritt in einen mit Inertgas gefüllten Raum minimiert werden, wird als Sperrgas geeignetes Inertgas gewählt. Soll der Austritt von Heißgas vermindert werden, ist im Regelfall kalte Luft als Sperrgas ausreichend. Liegt der Druck in den Räumen vor der Zellradschleuse (A) und nach der Zellradschleuse (B) unter dem atmosphärischen Außendruck und ist Luft als Sperrgas ausreichend, so genügen einfache Öffnungen in der Gehäusewand. Zu beachten ist in jedem Fall, daß das Sperrgas in den Prozeß eintritt, das heißt, entweder muß der Prozeß selbst aufnahmefähig für das Sperrgas sein, oder es müssen Vorkehrungen getroffen werden, daß an einer anderen Stelle im Schüttgutfluß eine der Sperrgasmenge entsprechende Menge Gas abfließen kann bzw. das zwischen Sperrgas und gewünschtem Prozessgas keine Interferenzen auftreten.

Die erfindungsgemäße Einrichtung kann insbesondere in einer Anlage zur Förderung von Schüttgut in einen Verbrennungsraum verwendet werden.

## Patentansprüche

1. Einrichtung zur Minimierung des Gasflusses durch Zellradschleusen, insbesondere bei der Förderung von Schüttgut durch Sperrgasbeaufschlagung der Zellradschleuse, die zwischen zwei Räumen (A) und (B) angeordnet ist, **dadurch gekennzeichnet, dass** im Gehäuse der Zellradschleuse (3) Sperrgasöffnungen beziehungsweise Sperrgasanschlüsse (1) vorgesehen sind, wobei der erforderliche Sperrgasdruck derart eingestellt ist, dass er höher ist als der Druck in jenem der Räume (A) oder (B), aus dem der Gasfluss durch die Zellradschleuse verhindert werden soll.

2. Einrichtung gemäß Anspruch 1, **dadurch gekennzeichnet, dass** zwischen den Hauptdurchtrittsöffnungen (4) mindestens mehr als zwei Kammer des Zellrades (3) von den Umschließungsflächen des Zellradgehäuses (2) verschlossen sind.

3. Einrichtung nach einem der Ansprüche 1 bis 2, dadruch gekennzeichnet, dass, wenn der Druck in den Räumen vor der Zellradschleuse (A) und nach der Zellradschleuse (B) kleiner ist als der Atmosphärendruck Umgebungsluft als Sperrgas verwendet wird.

4. Einrichtung nach Anspruch 3, **dadurch gekennzeichnet, dass** die Sperrgasöffnungen bzw. -anschlüsse (1) einfache Luftdurchtrittsöffnungen sind.

5. Verfahren zur Minimierung des Gasflusses durch Zellradschleusen, insbesondere bei der Förderung von Schüttgut durch Sperrgasbeaufschlagung der Zellradschleuse zwischen zwei Räumen (A) und (B), **dadurch gekennzeichnet, dass** im Gehäuse der Zellradschleuse (3) Sperrgasöffnungen beziehungsweise Sperrgasanschlüsse (1) vorgesehen sind, wobei der erforderliche Sperrgasdruck derart eingestellt ist, dass er höher ist als der Druck in jenem der Räume (A) oder (B), aus dem der Gasfluss durch die Zellradschleuse verhindert werden soll.

6. Verwendung der Einrichtung gemäß einem der Ansprüche 1 bis 4 in Anlagen zur Förderung von Schüttgut in einen Verbrennungsraum.
